# EUROPEAN PATENT SPECIFICATION

(11) **EP 2 092 401 B1**
(45) Date of publication and mention of the grant of the patent: **27.03.2019**
(21) Application number: 07845005.3
(22) Date of filing: 09.11.2007
(51) Int. Cl.: B64D 45/00, G05B 23/02, G05B 13/02, B64C 25/00

(54) **HARD LANDING DETECTION**
DETEKTION HARTER LANDUNGEN
DÉTECTION D'UN ATTERRISSAGE BRUTAL

(30) Priority: 10.11.2006 US 558815
(43) Date of publication of application: 26.08.2009
(73) Proprietor: The Boeing Company, Chicago, IL 60606-1596 (US)
(72) Inventor: HAGELIN, Jack S., Woodinville, Washington 98072 (US); DAVIS, Christopher L., Maple Valley, Washington 98038 (US); HAUGSE, Eric D., Seattle, Washington 98166 (US); REUTER, Richard J., Seattle, Washington 98144 (US); ANDERSON, David M., Sammamish, Washington 98075 (US); AKDENIZ, Aydin, Redmond, Washington 98052 (US); LEPERE, Jonathan R., Everett, Washington 98208 (US); EARLE, David P., Lynwood, WA 98087 (US)
(74) Representative: Howson, Richard Giles Bentham
(86) International application number: PCT/US2007/084236
(87) International publication number: WO 2008/060996

(56) References cited:
- WO-A-2006/053433
- US-A- 6 125 333
- US-A1- 2002 107 589
- US-A1- 2006 004 499
- ROY N ET AL: "Helicopter rotor blade frequency evolution with damage growth and signal processing" JOURNAL OF SOUND & VIBRATION, LONDON, GB, vol. 283, no. 3-5, 20 May 2005 (2005-05-20), pages 821-851, XP004830554 ISSN: 0022-460X
- YEN G ET AL: "Health monitoring of vibration signatures in rotorcraft wings" AEROSPACE CONFERENCE, 1997. PROCEEDINGS., IEEE SNOWMASS AT ASPEN, CO, USA 1-8 FEB. 1997, NEW YORK, NY, USA,IEEE, US, vol. 1, 1 February 1997 (1997-02-01), pages 279-288, XP010214589 ISBN: 978-0-7803-3741-1
- DORAISWAMI R ET AL: "An expert system for monitoring the status of control systems", INTELLIGENT CONTROL, 1990. PROCEEDINGS., 5TH IEEE INTERNATIONAL SYMPOS IUM ON PHILADELPHIA, PA, USA 5-7 SEPT. 1990, LOS ALAMITOS, CA, USA,IEEE COMPUT. SOC, US, 5 September 1990 (1990-09-05), pages 457-462, XP010021937, DOI: DOI:10.1109/ISIC.1990.128497 ISBN: 978-0-8186-2108-6

## Description

### TECHNICAL FIELD

The present invention relates generally to aircraft maintenance and, more particularly, to a method and system for detecting hard or heavy aircraft landings.

### BACKGROUND

Hard or heavy landings are significant high load events that may adversely impact airframe structural integrity. Such landings may result in damage that affects the ability of the aircraft to fly safely. When this happens, repairs must be performed prior to flying the aircraft again. An inspection must be performed when there is a hard landing, so as to determine if such repairs are needed.

However, the inspection process that is required to assess the potential for damage due to a suspected hard landing event is undesirably time consuming. Further, the inspection process frequently results in a finding of no damage. Studies have shown that up to 90% of pilot initiated hard landing inspections resulted in no finding of damage.

Although pilots attempt to be realistic about the need for inspections, the fact that people's lives are at stake creates a strong bias in favor of safety. The results of performing unnecessary inspections include undesirably increased labor costs and lost revenues due to the down time of the aircraft.

In view of the foregoing, there is a need for a method and system for detecting hard aircraft landings that is not subject to human bias and thus provides a more realistic indication of the severity of the landing and the consequent need for inspection.

In WO2006/053433 there are described a method and system for health monitoring of aircraft landing gear. The system includes sensors that are attached to the landing gear structure and equipment (e.g., one or more of brakes, tires, hydraulics, electrical systems and switches) and analyzed to report and alert personnel such as pilots, maintenance personnel, airline operators, ground crew and regulatory authorities of the health of the landing gear and the potential need for service, maintenance or replacement. The system monitors and reports critical health issues as real-time information which can be analyzed in conjunction with an extensive database of information and used to alert pilots or other relevant personnel to the condition of the landing gear and actions that may be required as a result.

### SUMMARY

In a first aspect of the invention there is provided a method for detecting a high load event of an aircraft, as defined in claim 1 of the appended claims.

In a second aspect of the invention there is provided a system as defined in claim 12.

Systems and methods are disclosed herein for the detection of load inducing events in structures, such as hard landings of aircraft. For example, a heuristic algorithm may be used to estimate the severity of at least one load, generally a plurality of loads, experienced by an aircraft during landing.

More particularly, the heuristic algorithm may use at least one flight parameter to facilitate estimation of the loads(s). Generally, the heuristic algorithm may use a plurality of flight parameters, such as pitch angle, roll angle, roll rate, center of gravity (CG) vertical speed, vertical acceleration, airspeed, pilot seat acceleration, and air/ground indication to facilitate the estimation of the loads.

Further, information from at least one sensor may be used to facilitate estimation of the load(s). For example, information from strain gauges and/or accelerometers may be used by the heuristic algorithm to facilitate the estimation of the load(s).

The heuristic algorithm may be trained using results from an analytical ground loads simulation. The heuristic algorithm may be validated using flight test data. The heuristic algorithm may update itself using strains that are measured during operation of the aircraft.

The heuristic algorithm may be based upon neural networks, such as probabilistic neural networks trained with Bayesian regularization techniques. Sampled flight parameters and sensor data prior to and during the landing event may be processed by the heuristic algorithm to estimate the loads induced on the aircraft.

The scope of the invention is defined by the claims, which are incorporated into this section by reference. A more complete understanding of embodiments of the present invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

Fig. 1 shows a high level overview of a hard landing detection system of the present invention in accordance with an exemplary embodiment of the present invention;
Fig. 2 shows a flow chart illustrating a method for detecting hard landings in accordance with an exemplary embodiment of the present invention; and
Fig. 3 shows a block diagram of a system for detecting hard landings in accordance with an exemplary embodiment of the present invention.

Embodiments of the present invention and their advantages are best understood by referring to the detailed description that follows. It should be appreciated that like reference numerals are used to identify like elements illustrated in one or more of the figures.

### DETAILED DESCRIPTION

According to contemporary practice, an attempt to fully characterize the loads applied to an aircraft during landing is performed by instrumenting the landing gear of the aircraft so as to obtain force measurements (e.g., via strain gauges). While this approach may be adequate in theory, the practical implementation of this technique presents logistical roadblocks, undesirably high costs, and reliability issues.

By way of contrast, an example of an embodiment of the present invention comprises methods and systems for detecting hard or heavy landings by using primarily kinematic information (i.e., displacement, velocity, accelerations, etc.). Thus, the need to instrument the aircraft is mitigated and costs are correspondingly decreased. One or more embodiments of the present invention may also use measured values based on instrumentation to further enhance accuracy.

One or more embodiments of the present invention comprises a hard landing detection method and system that provides information that aides substantially the maintenance process. A heuristic algorithm may use relevant aircraft flight parameters, as well as information from additional sensors, to predict pertinent loads critical to evaluation of damage due to a hard landing. By providing accurate and reliable load information, this system may significantly reduce the number of hours that an airplane is grounded for inspection due to a hard landing.

According to an example of an embodiment of the present invention, a heuristic algorithm uses multiple airplane parameters to predict load information. The parameters may include sources that describe an internal distribution of forces or strains in materials or structures of the aircraft. The algorithm may be trained using results from an analytical ground-loads simulation. The algorithm may be validated using flight-test data. In addition, if strains are measured during operation of the aircraft, then the algorithm may update itself as the aircraft ages.

One or more embodiments of the present invention may facilitate condition based maintenance. Thus, at least some aircraft maintenance procedures that are presently mandatory and periodic may be based upon need and thus only performed when necessary. This may be accomplished without compromising the safety of the aircraft. Variations of the algorithm described herein may be used to predict in-flight loads which would serve as a detailed load history for the airframe. The load history may then be used to alter the inspection and maintenance intervals resulting in increased revenues.

The heuristic algorithm may be based on derivatives of known mathematical theories. For example, the heuristic algorithm may be based on neural networks or probabilistic neural networks trained with Bayesian regularization.

The proposed hard landing detection system may be used to provide accurate and reliable load information for use in evaluating need and/or level of inspection that is required due to a hard landing event. In this manner, wasteful and unnecessary inspections may be avoided. Further, the scope of some inspections may be reduced to only those items and tests that are actually needed. Thus, both costs and downtime are desirably reduced while safety is maintained.

One or more embodiments of the present invention, such as the system as a whole, may further aid the maintenance process. By providing a more accurate estimation of loads developed during the landing event, the decision to proceed with an appropriate maintenance procedure may be made with enhanced accuracy. Cost savings may be realized by reducing the number of false call inspections resulting from improperly classified landings.

The load estimation algorithm determines approximate loads experienced by selected aircraft structures as a result of load producing events, such as landings. Flight parameter data and optionally sensor information may be recorded during such events. The load estimation algorithm may be executed either immediately following the event or at a later time. The load estimation algorithm may be executed either on board the aircraft or at a location or facility that is remote with respect to the aircraft.

Examples of flight parameters that may be used by the load estimation algorithm include, but are not limited to, pitch angle, roll angle, roll rate, center of gravity (CG) vertical speed, center of gravity (CG) vertical acceleration, airspeed, pilot seat acceleration, and air/ground indication. Examples of sensor information that may be used by the load estimation algorithm include, but are not limited to, strains and accelerations measured at key locations on the aircraft, e.g., on the landing gear, fuselage, nacelle struts, and on other key structural elements affected by hard landings.

In order to maintain desired fidelity, the flight parameters and sensor readings may be recorded with appropriate sample rates so as to accurately resolve the values of parameters that occurred prior to and during landing. It is worthwhile to note that this is generally the only operation that is necessarily performed in real time. Subsequent operations may generally occur off line, e.g., at another time and/or location.

The sampled flight parameters and sensor data may be processed to determine their initial and peak values. This reduced set of sampled data may be used as the input to the load estimation algorithm.

According to one or more embodiments of the present invention, heuristic models are used for load estimation. A heuristic model, such as one using artificial neural networks, may be used to model the complicated phenomena associated with load determination involving multiple inputs and outputs. The heuristic model may be configured so as to act much like a high order nonlinear curve fitting algorithm, such as by relating flight parameters and sensor data to load information.

The heuristic model may be created and/or trained by providing examples of inputs and outputs. Training data sets may be created analytically, e.g., using a numerical simulation, or may be created experimentally, e.g., using flight test data. Training data sets may be created by a combination of both analytical and experimental methods.

Some of the advantages of the use of a heuristic model (as compared to a finite element model, for example) are the ability to model considerably nonlinear phenomena with a fairly compact and efficient set of computations and the automatic handling of the model validation process (which may be extremely challenging, time consuming and costly). Using analytically developed training sets reduces the amount of data required from flight tests, and using judiciously chosen flight test data both validates and increases the accuracy of the algorithm.

Estimated stresses, strains, and/or loads may be used in a variety of ways. For example, all estimated loads may be compared to their threshold values. When one or more of the loads exceeds or approaches its respective threshold value, this would indicate a hard landing and thus the need for inspection. This data may be used in a binary sense such that no actual load information is presented to maintenance personnel. Thus, just a yes or no answer is provided so as to indicate whether or not the aircraft experienced a hard landing. In this manner, the need for an inspection may be determined.

Conversely, detailed information describing loads at a variety of locations around the aircraft may be presented to guide the inspection process. In this manner, some additional details regarding what needs to be inspected and how the inspection is to be performed may be provided.

Load information for many locations on an aircraft (not just the landing gear) may be provided. Thus, better information is available to guide maintenance personnel in both the need for an inspection and regarding what aircraft components are to be inspected.

Using flight parameters reduces the dependence upon strain sensors which have been shown to be less reliable than desired when used to monitor landing gear strains. Thus, reliability is enhanced and the performance of unnecessary inspection is made less likely. The large number of variables involved in a landing event are evaluated in a combined sense that facilitates classification of the landing as either acceptable or hard.

One or more embodiments of the present invention may be implemented completely or partially in software, such as via the use of a general purpose computer. One or more embodiments of the present invention may be implemented in hardware, such as via the use of one or more custom processors.

One or more embodiments of the present invention provide a method and system for detecting hard landings that is cost effective, accurate (i.e., provides minimal false positive and zero false negative hard landing indications), and reliable (i.e., does not solely rely upon measurements from transducers that are non-redundant and/or susceptible to damage). In this manner, less reliance need be placed upon the subjective opinion of the pilot and less downtime of the aircraft is likely to result.

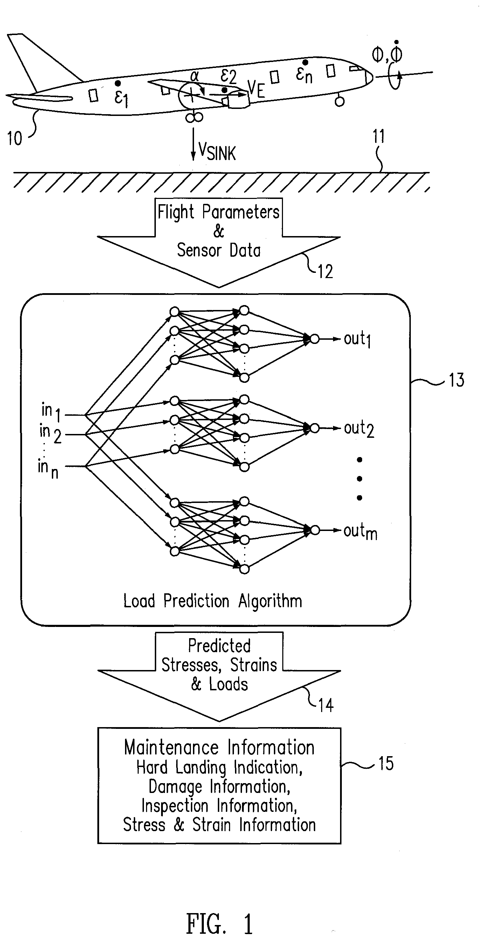

Referring now to Figure 1, a high level overview of an example of an embodiment of a hard landing detection system of the present invention is shown. An aircraft 10 lands upon a surface, typically a runway 11. Flight parameters and/or sensor data 12 are determined and recorded. For example, pitch angle, roll angle, roll rate, center of gravity (CG) vertical speed, center of gravity (CG) vertical acceleration, airspeed, pilot seat acceleration, and air/ground indication may be determined and recorded.

The heuristic load estimation algorithm (also referred to as a load prediction algorithm) 13 receives at least one, generally a plurality, of inputs. These inputs may comprise flight data and/or sensor data, as described above. These inputs are processed according to an algorithm that has been determined to reliably provide adequately accurate structural load information as outputs. For example, at its simplest the algorithm may comprise one or more lookup tables that correlate flight data and/or sensor data to loads.

As those skilled in the art will appreciate, a heuristic algorithm may generally be trained so as to provide properly known outputs when given corresponding inputs. For example, the heuristic algorithm may be trained using known inputs and outputs derived from experiments using instrumented aircraft. Alternatively, the heuristic algorithm may be trained using results from an analytical ground-loads simulation. The heuristic algorithm may be validated using flight test data. The heuristic algorithm may optionally update itself using strains that are measured during operation of the aircraft.

Estimated or predicted stresses, strains and/or loads 14 are provided by the load estimation program 13. This information may be used, such as by another algorithm, to determine what, if any, inspections and/or maintenance procedures (such as replacement and/or testing of parts) is necessary. Thus, maintenance information 15, such as hard landing indication, damage information, inspection information, and/or stress and strain information is provided to maintenance personnel. In this manner, unnecessary inspections and/or maintenance are mitigated and necessary inspections and/or maintenance are enhanced.

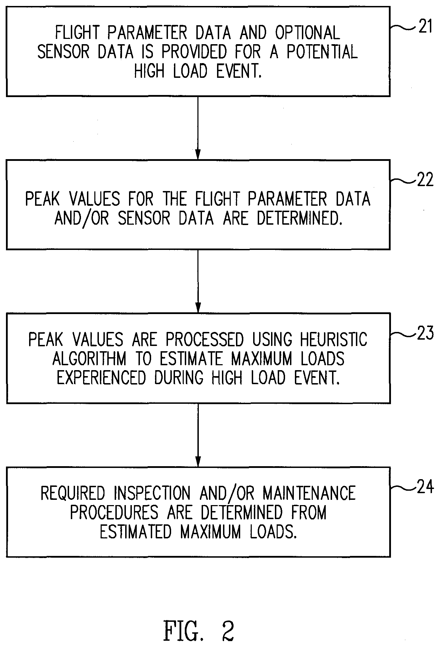

Referring now to Figure 2, a flow chart shows the method of detecting hard landings according to an exemplary embodiment of the present invention. Flight parameter data is provided when there is a potential high load event, such as a hard landing, as indicated in block 21. Optionally, sensor data (such as from accelerometers, velocity sensors, inclinometers and/or strain gauges) are also provided.

Initial and peak values for the flight parameters and/or sensor data are determined, as indicated in block 22. As those skilled in the art will appreciate, the values of such parameters are generally the most indicative of the peak values of loads experienced by aircraft structures.

The initial and peak values are processed using a heuristic algorithm as indicated in block 23. The heuristic algorithm estimates or predicts the peak loads experienced during the high load event.

Any inspections and/or maintenance procedures that are determined to be necessary as a result of the loads experienced by the aircraft are performed, as indicated in block 24. Use of the present invention tends to provide a better indication of the need for such inspections and maintenance procedures, as compared to the subjective determination of a hard landing by a pilot.

As a simplified example of an embodiment of the present invention, vertical acceleration of the aircraft center of gravity (CG) alone may be used to determine when a hard landing has occurred. Vertical CG acceleration may be derived from flight parameters. The maximum CG acceleration experienced during landing may be used by the heuristic load estimation algorithm to estimate the loads experienced by the aircraft. For example, the load estimation program may use prior flight data to estimate such loads (such as wherein an instrumented aircraft was subjected to various vertical accelerations during test landings and strains were measured on aircraft structures to determine the loads experienced thereby). When loads are greater than a predetermined threshold, then inspections and/or maintenance procedures are indicated.

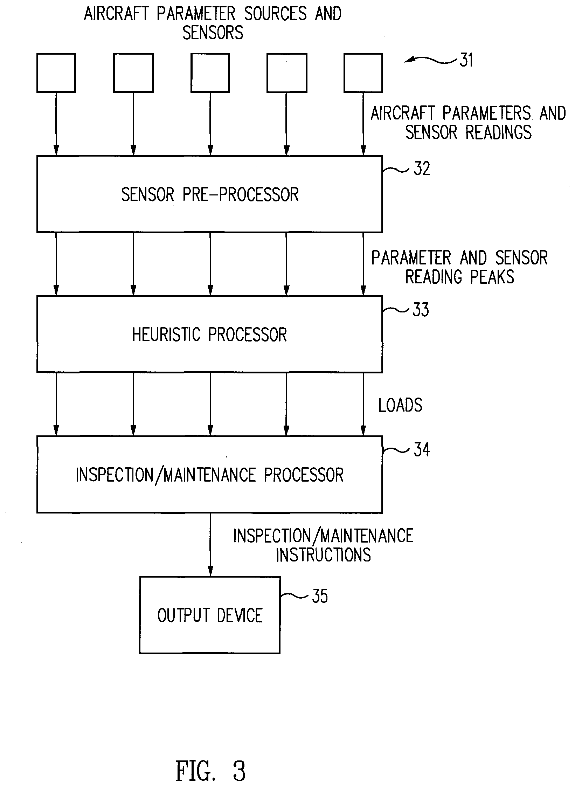

Referring now to Figure 3, a plurality of aircraft parameter sources and sensors 31 provide aircraft parameters and sensor readings to sensor pre-processor 32. The aircraft parameter sources may include sources of information such as pitch angle, roll angle, roll rate, center of gravity (CG) vertical speed, center of gravity (CG) vertical acceleration, airspeed, pilot seat acceleration, and air/ground indication. The sensors may include accelerometers and strain gauges.

Sensor pre-processor 32 determines the initial and peak values of the aircraft parameters and/or sensor readings. These values are provided to heuristic processor 33. As those skilled in the art will appreciate, the initial and peak values of such data tend to be more representative of potential excessive loads than do other portions of such data.

Heuristic processor 33 uses a heuristic algorithm, as discussed above, to estimate loads, such as loads on key or safety critical aircraft structures. The loads are provided to inspection and maintenance processor 34. Inspection and maintenance processor 34 provides inspection and/or maintenance instructions to an output device 35, such as a monitor or printer. The inspection and/or maintenance instructions may be used by maintenance personnel to perform any inspections and/or maintenance procedures that are required as a result of a hard landing or other load inducing event.

Reference to an aircraft herein is by way of example only and not by way of limitation. Those skilled in the art will appreciate that the methods and systems disclosed herein are likewise applicable to a large variety of other items including non-vehicles (such as buildings, oil rigs, and bridges) and vehicles (such as automobiles, ships, submarines, satellites, and spacecraft).

Hard landings are described herein as examples of load inducing events. One or more embodiments of the present invention may be used to detect when other types of load inducing events have induced loads that exceed a threshold. For example, high load events caused by gusts during flight.

Embodiments described above illustrate but do not limit the invention. It should also be understood that numerous modifications and variations are possible in accordance with the principles of the present invention. Accordingly, the scope of the invention is defined only by the following claims.

## Claims

1. A method for detecting a high load event of an aircraft, the method comprising using a heuristic algorithm to estimate at least one load experienced by the aircraft during the event, **characterized in that**
wherein the heuristic algorithm uses at least one aircraft flight parameter to facilitate estimation of the load(s),the heuristic algorithm self updates using sensor information that is measured during operation of the aircraft, and
wherein the heuristic algorithm is used to predict in-flight loads which serve as a detailed load history for an airframe of the aircraft.

2. The method as recited in claim 1, wherein the heuristic algorithm uses information from at least one sensor to facilitate estimation of the load(s).

3. The method as recited in claim 1, wherein the heuristic algorithm uses information from at least one kinematic source to estimate the load(s).

4. The method as recited in claim 1, wherein the heuristic algorithm uses information from at least one kinematic source to estimate a plurality of loads, the kinematic source(s) comprising at least one source that provides information that is representative of an internal distribution of forces in at least one structural element of the aircraft.

5. The method as recited in claim 1, wherein the heuristic algorithm uses information comprising at least one of pitch angle, roll angle, roll rate, vertical speed, vertical acceleration, airspeed, pilot seat acceleration, and air/ground indication to detect a hard landing event.

6. The method as recited in claim 1, wherein the heuristic algorithm uses information comprising at least one of strains and accelerations measured at key locations on the aircraft.

7. The method as recited in claim 1, wherein the heuristic algorithm is trained using results from an analytical loads simulation.

8. The method as recited in claim 1, wherein the sensor information is strains that are measured during operation of the aircraft.

9. The method as recited in claim 1, wherein the heuristic algorithm utilizes probabilistic neural networks.

10. The method as recited in claim 1, wherein the heuristic algorithm utilizes Bayesian regularization for training.

11. The method as recited in claim 1, wherein sampled flight parameters and sensor data are processed to estimate their initial and peak values and the heuristic algorithm uses these values to estimate the loads.

12. A system for detecting a high load event of an aircraft, the system comprising:
a sensor pre-processor configured to receive at least one aircraft flight parameter; and **characterized by** further comprising:
a load estimation processor configured to use a heuristic algorithm to estimate at least one load on an aircraft structure from the aircraft flight parameter,wherein the heuristic algorithm self updates using sensor information that is measured during operation of the aircraft,
wherein the heuristic algorithm is used to predict in-flight loads which serve as a detailed load history for an airframe of the aircraft.

13. The system as recited in claim 12, wherein the sensor pre-processor is configured to determine initial and peak values of the aircraft flight parameter, and the load estimation processor is configured to use the heuristic algorithm to estimate the load from the initial and peak values of the aircraft flight parameter.

14. The system as recited in claim 12, wherein the sensor pre-processor is configured to determine the initial and peak values of sensor readings and the load estimation processor is configured to use the heuristic algorithm to estimate loads on aircraft structures using both aircraft parameter and measured sensor readings.

15. The system as recited in claim 12, further comprising a processor for processing the loads so as to determine what aircraft structural elements require inspection and/or maintenance.

## Patentansprüche

1. Verfahren zum Erfassen eines Hochbelastungsereignisses eines Flugzeugs, wobei das Verfahren das Verwenden eines heuristischen Algorithmus zum Schätzen mindestens einer von dem Flugzeug während des Ereignisses erfahrenen Belastung aufweist,
**dadurch gekennzeichnet, dass** der heuristische Algorithmus mindestens einen Flugzeugflugparameter zum Ermöglichen der Schätzung der Belastung(en) verwendet, wobei der heuristische Algorithmus sich selbst unter Verwendung der Sensorinformationen, die während des Betriebs des Flugzeugs gemessen werden, aktualisiert, und
wobei der heuristische Algorithmus zum Vorhersagen von Belastungen während des Flugs, welche als ein detailliertes Belastungsprotokoll für ein Flugwerk des Flugzeugs dienen, verwendet wird.

2. Verfahren nach Anspruch 1, wobei der heuristische Algorithmus Informationen von mindestens einem Sensor verwendet, um die Schätzung der Belastung(en) zu ermöglichen.

3. Verfahren nach Anspruch 1, wobei der heuristische Algorithmus Informationen von mindestens einer kinematischen Quelle verwendet, um die Belastung(en) zu schätzen.

4. Verfahren nach Anspruch 1, wobei der heuristische Algorithmus Informationen von mindestens einer kinematischen Quelle verwendet, um mehrere Belastungen zu schätzen, wobei die kinematische(n) Quelle(n) mindestens eine Quelle aufweist(aufweisen), welche eine interne Verteilung der Kräfte in mindestens einem strukturellen Element des Flugzeugs darstellen.

5. Verfahren nach Anspruch 1, wobei der heuristische Algorithmus Informationen verwendet, welche mindestens eines von einem Nickwinkel, Rollwinkel, einer Rollrate, Vertikalgeschwindigkeit, Vertikalbeschleunigung, Fluggeschwindigkeit, Beschleunigung am Pilotensitz und Luft-Boden-Angabe aufweisen, um ein Ereignis einer harten Landung zu erfassen.

6. Verfahren nach Anspruch 1, wobei der heuristische Algorithmus Informationen verwendet, welche mindestens eines von Belastungen und Beschleunigungen, die an Schlüsselstellen des Flugzeugs gemessen wurden, aufweisen.

7. Verfahren nach Anspruch 1, wobei der heuristische Algorithmus unter Verwendung von Ergebnissen von einer analytischen Belastungssimulation trainiert wird.

8. Verfahren nach Anspruch 1, wobei die Sensorinformationen Belastungen sind, welche während des Betriebs des Flugzeugs gemessen werden.

9. Verfahren nach Anspruch 1, wobei der heuristische Algorithmus probabilistische neuronale Netze verwendet.

10. Verfahren nach Anspruch 1, wobei der heuristische Algorithmus die Bayes'sche Regularisierung für das Training verwendet.

11. Verfahren nach Anspruch 1, wobei die als Probe genommenen Flugparameter und Sensordaten verarbeitet werden, um ihre Anfangs- und Spitzenwerte zu berechnen, und der heuristische Algorithmus diese Werte verwendet, um die Belastungen zu schätzen.

12. System zum Erfassen eines Hochbelastungsereignisses eines Flugzeugs, wobei das System Folgendes aufweist:
einen Sensor-Präprozessor, welcher konfiguriert ist, um mindestens einen Flugzeugflugparameter zu empfangen; und **dadurch gekennzeichnet, dass** es ferner Folgendes aufweist:
einen Belastungsschätzungsprozessor, welcher konfiguriert ist, um einen heuristischen Algorithmus zum Schätzen mindestens einer Belastung an einer Flugzeugstruktur aus dem Flugzeugflugparameter zu verwenden, wobei der heuristische Algorithmus sich selbst unter Verwendung der Sensorinformationen, die während des Betriebs des Flugzeugs gemessen werden, aktualisiert,
wobei der heuristische Algorithmus zum Vorhersagen von Belastungen während des Flugs, welche als ein detailliertes Belastungsprotokoll für ein Flugwerk des Flugzeugs dienen, verwendet wird.

13. System nach Anspruch 12, wobei der Sensor-Präprozessor konfiguriert ist, um die Anfangs- und Spitzenwerte des Flugzeugflugparameters zu bestimmen und wobei der Belastungsschätzungsprozessor konfiguriert ist, um den heuristischen Algorithmus zum Bestimmen der Belastung aus den Anfangs- und Spitzenwerten des Flugzeugflugparameters zu schätzen.

14. System nach Anspruch 12, wobei der Sensor-Präprozessor konfiguriert ist, um den Anfangs- und Spitzenwert der Ablesungen des Sensors zu bestimmen, und der Belastungsschätzungsprozessor konfiguriert ist, um den heuristischen Algorithmus zum Schätzen der Belastungen an Flugzeugstrukturen unter Verwendung sowohl des Fluzeugparameters als auch der gemessenen Ablesungen des Sensors zu verwenden.

15. System nach Anspruch 12, welches ferner einen Prozessor zum Verarbeiten der Belastungen aufweist, um zu bestimmen, welche Strukturelemente des Flugzeugs eine Prüfung und/oder Wartung benötigen.

## Revendications

1. Procédé de détection d'un événement de charge élevée d'un avion, le procédé comprenant d'utiliser un algorithme heuristique pour estimer au moins une charge éprouvée par l'avion pendant l'évènement, **caractérisé en ce que** l'algorithme heuristique utilisant au moins un paramètre de vol d'avion pour faciliter l'estimation de la ou des charges, l'algorithme heuristique s'actualise lui-même en utilisant des informations de capteur qui sont mesurées pendant le fonctionnement de l'avion, et l'algorithme heuristique est utilisé pour prédire des charges en vol, ce qui sert d'historique de charge détaillé pour un fuselage de l'avion.

2. Procédé selon la revendication 1, dans lequel l'algorithme heuristique utilise des informations en provenance d'au moins un capteur pour faciliter l'estimation de la ou des charges.

3. Procédé selon la revendication 1, dans lequel l'algorithme heuristique utilise des informations en provenance d'au moins une source cinématique pour estimer la ou les charges.

4. Procédé selon la revendication 1, dans lequel l'algorithme heuristique utilise des informations en provenance d'au moins une source cinématique pour estimer plusieurs charges, la ou les sources cinématiques comprenant au moins une source qui fournit des informations représentatives d'une distribution interne de forces dans au moins un élément structurel de l'avion.

5. Procédé selon la revendication 1, dans lequel l'algorithme heuristique utilise des informations comprenant au moins une information parmi un angle de tangage, un angle de roulis, taux de roulis, vitesse verticale, accélération verticale, vitesse aérodynamique, accélération au siège du pilote et indications air/sol pour détecter un événement d'atterrissage dur.

6. Procédé selon la revendication 1, dans lequel l'algorithme heuristique utilise des informations comprenant au moins une information parmi des tensions et accélérations mesurées en des endroits clefs sur l'avion.

7. Procédé selon la revendication 1, dans lequel l'algorithme heuristique est entraîné en utilisant des résultats d'une simulation de charges analytique.

8. Procédé selon la revendication 1, dans lequel les informations de capteur sont des tensions mesurées pendant le fonctionnement de l'avion.

9. Procédé selon la revendication 1, dans lequel l'algorithme heuristique utilise des réseaux neuraux probabilistes.

10. Procédé selon la revendication 1, dans lequel l'algorithme heuristique utilise une régulation bayésienne pour son entraînement.

11. Procédé selon la revendication 1, dans lequel des paramètres de vol échantillonnés et des données de capteur sont traités pour estimer les valeurs initiales et maximales, et l'algorithme heuristique utilise ces valeurs pour estimer les charges.

12. Système de détection d'un événement de forte charge d'un avion, le système comprenant :
un préprocesseur de capteur conçu pour recevoir au moins un paramètre de vol d'un avion ;
et **caractérisé en ce qu'**il comprend en outre :
un processeur d'estimation de charge conçu pour utiliser un algorithme heuristique pour estimer au moins une charge sur une structure d'avion à partir des paramètres de vol de l'avion, l'algorithme heuristique s'actualisant lui-même en utilisant des informations de capteur qui sont mesurées pendant le fonctionnement de l'avion,
l'algorithme heuristique étant utilisé pour prédire des charges en vol, ce qui sert d'historique de charge détaillé pour un fuselage de l'avion.

13. Système selon la revendication 12, dans lequel le préprocesseur de capteur est conçu pour déterminer des valeurs initiales et maximales du paramètre de vol de l'avion, et le processeur d'estimation de charge est conçu pour utiliser l'algorithme heuristique pour estimer la charge à partir des valeurs initiales et maximales du paramètre de vol de l'avion.

14. Système selon la revendication 12, dans lequel le préprocesseur de capteur est conçu pour déterminer des valeurs initiales et maximales de valeurs de mesure de capteur et le processeur d'estimation de charge est conçu pour utiliser l'algorithme heuristique pour estimer des charges sur des structures de l'avion en utilisant à la fois le paramètre de vol de l'avion et des valeurs de mesure de capteur.

15. Système selon la revendication 12, comprenant en outre un processeur pour traiter les charges de façon à déterminer quels éléments structurels de l'avion nécessitent une inspection et/ou une maintenance.
